(19) Europäisches Patentamt / European Patent Office / Office européen des brevets

(11) **EP 3 853 025 B1**

(12) **EUROPÄISCHE PATENTSCHRIFT**

(45) Veröffentlichungstag und Bekanntmachung des Hinweises auf die Patenterteilung:
**01.01.2025   Patentblatt 2025/01**

(21) Anmeldenummer: **19801298.1**

(22) Anmeldetag: **07.11.2019**

(51) Internationale Patentklassifikation (IPC):
**B29C 64/153** (2017.01)    **B33Y 10/00** (2015.01)
**B33Y 70/00** (2020.01)    **B33Y 80/00** (2015.01)
**C08J 3/20** (2006.01)    **C08K 3/013** (2018.01)
**C08K 3/04** (2006.01)

(52) Gemeinsame Patentklassifikation (CPC):
(C-Sets verfügbar)
**B29C 64/153; B33Y 10/00; B33Y 70/00;
B33Y 80/00; C08J 3/203; C08K 3/013; C08K 3/04;**
C08J 2377/02; C08J 2377/06; C08K 2201/003
(Forts.)

(86) Internationale Anmeldenummer:
**PCT/EP2019/080553**

(87) Internationale Veröffentlichungsnummer:
**WO 2020/099237 (22.05.2020 Gazette 2020/21)**

(54) **VERZUGSOPTIMIERTES KUNSTSTOFFPULVER**

WARPAGE-OPTIMIZED POLYMER POWDER

POUDRE PLASTIQUE À DÉFORMATION OPTIMISÉE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität:   **12.11.2018   DE 102018219303**

(43) Veröffentlichungstag der Anmeldung:
**28.07.2021   Patentblatt 2021/30**

(73) Patentinhaber: **EOS GmbH Electro Optical Systems
82152 Krailling (DE)**

(72) Erfinder:
- **HOTTER, Andreas
  83022 Rosenheim (DE)**
- **FRANGOV, Stoyan
  81475 München (DE)**
- **CHRIST, Marius
  81241 München (DE)**

(74) Vertreter: **Prüfer & Partner mbB
Patentanwälte · Rechtsanwälte
Sohnckestraße 12
81479 München (DE)**

(56) Entgegenhaltungen:
WO-A1-2005/085326    WO-A1-2005/085326
US-A1- 2008 122 141    US-A1- 2008 122 141

- **FERRO-PLAST S.R.L.: "CARBON BLACK IN POLVERE E PERLINE PER MATERIE PLASTICHE", 4 February 2020 (2020-02-04), Vimodrone, Italy, pages 1, XP055664888, Retrieved from the Internet <URL:https://www.ferroplast.com/pdf/TDS_Carbon_Black_List.pdf> [retrieved on 20200204]**
- **FERRO-PLAST S.R.L.: "CARBON BLACK IN POLVERE E PERLINE PER MATERIE PLASTICHE", 4 February 2020 (2020-02-04), Vimodrone, Italy, pages 1, XP055664888, Retrieved from the Internet <URL:https://www.ferroplast.com/pdf/TDS_Carbon_Black_List.pdf> [retrieved on 20200204]**

EP 3 853 025 B1

(52) Gemeinsame Patentklassifikation (CPC): (Forts.)

C-Sets
**C08K 3/013, C08L 77/06**

**Beschreibung**

Die vorliegende Erfindung bezieht sich auf ein Kunststoffpulver für die Verwendung in einem schichtweise arbeitenden Verfahren zur Herstellung von Formkörpern, bei dem selektiv Bereiche einer jeweiligen Pulverschicht geschmolzen und wieder verfestigt werden. Des Weiteren ist Gegenstand der vorliegenden Erfindung ein Verfahren zur Herstellung eines Formkörpers unter Verwendung des erfindungsgemäßen Kunststoffpulvers als Aufbaumaterial, ein aus dem erfindungsgemäßen Pulver hergestellter Formkörper sowie ein System zur Herstellung erfindungsgemäßer Formkörper.

Wie beispielsweise aus der DE 44 10 046 bekannt ist, kann ein Verfahren zur Herstellung eines dreidimensionalen Objekts durch selektives Sintern mittels elektromagnetischer Strahlung mit Hilfe einer elektromagnetischen Strahlungsquelle schichtweise durchgeführt werden. In einem solchen Verfahren wird ein dreidimensionales Objekt schichtweise - nach dem Prinzip des "Additive Manufacturing" - durch Auftragen von Pulverschichten und Bondieren dieser Schichten miteinander durch selektives Verfestigen des Pulvers an den den Querschnitten des Objekts entsprechenden Stellen hergestellt.

Aus der WO2005085326A1 ist ein Polymerpulver für die additive Fertigung durch Lasersintern bekannt, das ein partikuläres Kohlenstoffmaterial enthält.

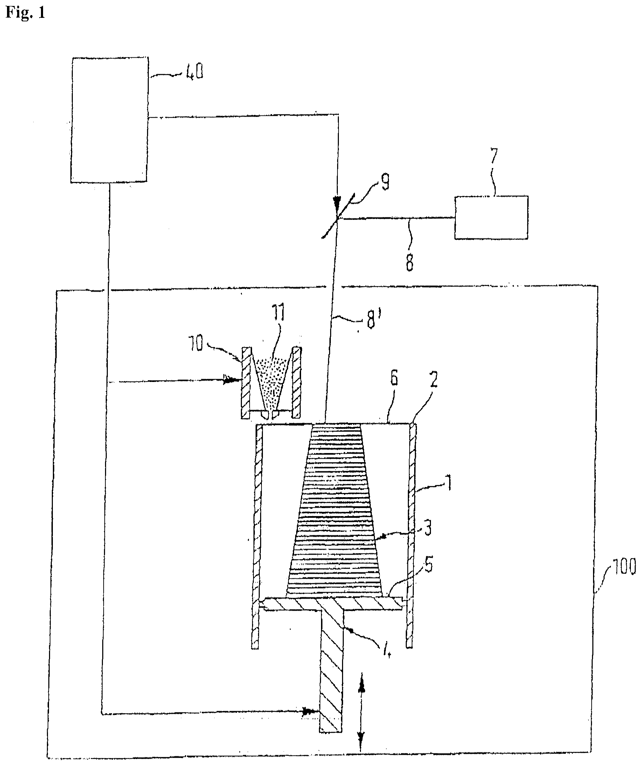

Fig. 1 zeigt beispielhaft eine Lasersintervorrichtung, anhand derer ein Verfahren zur schichtweisen Herstellung eines dreidimensionalen Objektes durchgeführt werden kann. Wie aus Fig. 1 ersichtlich ist, weist die Vorrichtung einen Behälter 1 auf. Dieser ist nach oben offen und nach unten durch einen Träger 4 zum Tragen eines zu bildenden Objektes 3 begrenzt. Durch den oberen Rand 2 des Behälters (bzw. seiner Seitenwände) wird eine Arbeitsebene 6 definiert. Das Objekt befindet sich auf der Oberseite des Trägers 4 und wird aus einer Mehrzahl sich parallel zu der Oberseite des Trägers 4 erstreckender Schichten aus einem mittels elektromagnetischer Strahlung verfestigbaren, pulverförmigen Aufbaumaterial gebildet. Der Träger ist dabei über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen des zu verfestigenden Pulvermaterials 11 auf die Trägeroberfläche 5 oder eine zuletzt verfestigte Schicht vorgesehen. Weiterhin ist oberhalb der Arbeitsebene 6 eine Bestrahlungseinrichtung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 gelenkt. Eine Steuereinheit 40 ermöglicht die Steuerung des Trägers 4, der Aufbringungsvorrichtung 10 und der Ablenkeinrichtung 9. Die Elemente 1 bis 6, 10 und 11 sind innerhalb des Maschinenrahmens 100 angeordnet.

Bei der Herstellung des dreidimensionalen Objektes 3 wird das Pulvermaterial 11 schichtweise auf den Träger 4 bzw. eine zuvor verfestigte Schicht aufgetragen und mit dem Laserstrahl 8' an den dem Objekt entsprechenden Stellen einer jeden Pulverschicht verfestigt. Der Träger wird nach jeder selektiven Verfestigung einer Schicht um die Dicke der als nächstes aufzutragenden Pulverschicht abgesenkt.

Verglichen mit dem oben beschriebenen System gibt es viele Modifikationen von Verfahren und Vorrichtungen zur Herstellung eines dreidimensionalen Objekts (Formkörpers) durch selektives Sintern mittels elektromagnetischer Strahlung, die ebenfalls verwendet werden können. Zum Beispiel könnten anstatt eines Lasers und/oder eines Lichtstrahls andere Systeme verwendet werden, um selektiv elektromagnetische Strahlung zu liefern, wie beispielsweise Masken-Belichtungssysteme oder dergleichen.

Als Aufbaumaterial kommt häufig ein Pulver mit Pulverteilchen umfassend ein thermoplastisches Polymermaterial in Betracht. Die mechanischen Eigenschaften des hergestellten Objekts können durch geeignete Wahl des Polymers im Rohmaterial beeinflusst werden. So werden Polymere, die zu bevorzugten mechanischen Werkstoffeigenschaften im finalen Objekt führen, zum Beispiel in der DE 10 2008 024 281 A1 und DE 10 2008 024 288 A1 beschrieben. Ebenso wurde beschrieben, dass die mechanischen Eigenschaften durch Verwendung von Füllstoffen weiter verbessert werden könnten. Beispielsweise könnten Kohlefasern, Glasfasern, Kevlar-Fasern, Carbon-Nanotubes, oder Füllstoffe, die ein geringes Aspektverhältnis (Glaskugeln, Aluminiumgries, etc.) oder mineralische Füllstoffe wie Titanoxid in das Polymer oder Copolymer-haltige Pulver eingearbeitet werden.

Zur Verbesserung von Eigenschaften wie beispielsweise der Farbe oder der Absorption von eingebrachter Energie zum Aufschmelzen können polymerbasierten Materialien vor der Verarbeitung funktionelle Additive, Füllstoffe, Verstärkungsfasern und/oder Hilfsstoffe zugemischt werden. Für die Kristallisation von polymerbasierten Materialien aus einer Schmelze müssen Kristallisationskeime vorhanden sein, die Kristallisationsgeschwindigkeit ergibt sich unter anderem aus der Keimdichte (Gächter/Müller, Kunststoff-Additive, 3. Ausgabe, Seite 893 ff.).

Ein großer bekannter Nachteil ist, dass der Zusatz von Additiven üblicherweise mit einer Verkleinerung des Temperaturfensters, schlechterer z-Anbindung der Schichten und stärkerem Verzug der Bauteile der nach dem Prinzip des "Additive Manufacturing" arbeitenden Verfahren einhergeht. Funktionelle Additive, Füllstoffe, Verstärkungs- und/oder Hilfsstoffe fungieren meist als zusätzliche Keimbildner, wodurch sich in der Regel die Kristallisationsgeschwindigkeit und damit die analytisch ermittelte Kristallisationstemperatur erhöhen. Die Kristallisationstemperatur kann durch die Onset- und extrapolierten Peak-Temperaturen einer DDK-/DSC-Messung ermittelt werden. Eine Erhöhung der Onset-Temperatur der Kristallisation führt zu einer Verkleinerung des SLS-Sinterfensters (Manfred Schmid, Selektives Lasersintern (SLS) mit Kunststoffen, 2015, Seiten 78 und 79) und zu einem deutlich ansteigendem (Bau-)Verzug der lasergesinterten Bauteile aufgrund von früher einsetzenden Schwundeffekten.

Dieser Nachteil kommt insbesondere auch dann zum Tragen, wenn wie in der der deutschen Patentanmeldung DE 10 2004 012 683 A1 IR-Absorber beigemischt werden, um beispielsweise in einem nach dem Prinzip des Additive Manufacturing arbeitenden Prozesses Kunststoffe mit elektromagnetischer Strahlung der Wellenlänge im Nahinfrarot-(NIR) Bereich an- und/oder aufzuschmelzen. Da die meisten Polymere NIR-Strahlung nicht absorbieren, dient das Additiv als Absorbens der NIR-Strahlung, welches bei der Wellenlänge die eingebrachte Energie absorbiert und in Wärme umsetzt.

Daher ist eine Aufgabe der vorliegenden Erfindung, ein Verfahren und System zum Herstellen eines dreidimensionalen Objekts durch selektives Verfestigen des Aufbaumaterials an den dem Querschnitt des dreidimensionalen Objekts in der jeweiligen Schicht entsprechenden Stellen durch Einwirkung von Strahlung bereitzustellen, dass die zuvor beschriebenen Nachteile zumindest zum Teil überwindet. Ebenso ist es eine Hauptaufgabe der Erfindung ein Pulver für die Verwendung als Aufbaumaterial in einem derartig verbesserten Verfahren sowie einen durch das vorteilhafte Verfahren hergestellten Formkörper bereitzustellen.

Diese Aufgabe wird gelöst durch ein Kunststoffpulver nach Anspruch 1, ein Herstellungsverfahren nach Anspruch 9, ein dreidimensionales Objekt nach Anspruch 10 und ein System nach Anspruch 13. Weiterbildungen der Erfindung sind in den Unteransprüchen festgelegt.

Gemäß einem ersten Aspekt der vorliegenden Erfindung weist das Kunststoffpulver eine Mischung aus polymerbasierten Partikeln und einem partikulären Additiv auf, wobei das partikuläre Additiv ein partikuläres Kohlenstoffmaterial ist und so ausgewählt ist, dass der Kristallisationspunkt der Mischung aus den polymerbasierten Partikeln und dem partikulären Additiv im Vergleich zu dem Kristallisationspunkt einer Mischung umfassend die polymerbasierten Partikel ohne das partikuläre Additiv um nicht mehr als 2,5°C erhöht ist, wobei der jeweilige Kristallisationspunkt $T_{K\,Onset}$ entspricht, welcher mittels DSC ermittelt wird. Vorzugsweise umfasst das partikuläre Additiv Graphit und/oder Ruß und insbesondere Gasruß. Gasruß bezeichnet Ruß, der als Rückstand bei der Erdgasverbrennung gewonnen werden kann. Im Vergleich zu anderen Industrierußen weist Gasruß einen niedrigeren Kohlenstoffgehalt (<98 Gew.-%) und/oder eine engere Korngrößenverteilung auf.

Das partikuläre Kohlenstoffmaterial ist derart ausgewählt, dass der Kristallisationspunkt der Mischung aus den Polymerpartikeln und dem partikulären Additiv im Vergleich zu dem Kristallisationspunkt einer Mischung aus den polymerbasierten Partikeln ohne dem partikulären Additiv um nicht mehr als 2,5°C, vorzugsweise nicht mehr als 2,0°C und in bestimmten Ausführungsformen nicht mehr als 1,5°C beträgt. Bei der Bestimmung der Erhöhung des Kristallisationspunkts ist die Schwankung der Messmethode zu berücksichtigen, die im Fall von DSC zwischen 0,5 und 1,0 °C beträgt.

Das erfindungsgemäße Pulver soll insbesondere als Aufbaumaterial zum Herstellen eines dreidimensionalen Objekts durch selektives Verfestigen des Aufbaumaterials an den dem Querschnitt des dreidimensionalen Objekts in der jeweiligen Schicht entsprechenden Stellen durch Einwirkung von Strahlung, insbesondere NIR-Strahlung Verwendung finden. Unter der Bezeichnung "Verfestigen" ist dabei ein zumindest teilweises An- oder Aufschmelzen mit anschließendem Erstarren bzw. Wiederverfestigen des Aufbaumaterials zu verstehen. Der Begriff "selektiv" bezeichnet in dem Kontext des Verfestigens ein örtlich begrenztes Bestrahlen an Stellen einer kontinuierlichen Schicht, die zu verfestigen sind, während Stellen der Schicht, die nicht zu verfestigen sind, nicht bestrahlt werden. Im Gegensatz zu einem derartigen selektiven Verfestigen steht eine Technik, bei der keine vollständige Schicht ausgebreitet wird, sondern das Aufbaumaterial nur an Stellen ausgebreitet wird, an denen eine Verfestigung gewünscht ist. Die Bestrahlung kann in diesem Fall auch an Stellen erfolgen, die nicht zu verfestigen sind.

Der Begriff "dreidimensionales Objekt" wird hier synonym für den Begriff "Formkörper" verwendet. Der Begriff "Polymerpartikel" wird hier synonym für den Begriff "polymerbasierte Partikel" verwendet und bezeichnet hier Partikel, die hier näher beschriebenes Polymer enthalten, vorzugsweise zu mindestens 20 Gew.-%, weiter bevorzugt zu mindestens Gew.-40 %, und insbesondere zu mindestens Gew.-60 % daraus bestehen. Die restlichen Bestandteile können im Wesentlichen Füllstoffe beinhalten.

Das erfindungsgemäße Pulver weist unerwartete Vorteile im Additive Manufacturing Prozess sowie in den dadurch hergestellten Formkörpern auf. So kann der bekannt negative Einfluss von in Form einer Trockenmischung eingemischten Additiven in Pulver auf den Laser-Sinter-Prozess erheblich begrenzt werden. Infolgedessen wird auch der negative Einfluss auf die Bauteilqualität stark reduziert. Insgesamt zeigt sich also eine deutliche Verbesserung hinsichtlich des Prozessfensters, der z-Anbindung der Schichten, und/oder dem Verzug der Bauteile. Dadurch ist es möglich, einen Laser-Sinter-Prozess mit einer Lichtquelle im NIR-Bereich durchzuführen, ohne dass es zu nachteiligen Einflüssen auf das Herstellungsverfahren und/oder den hergestellten Formkörper kommt.

Eine nicht wesentliche Erhöhung des Kristallisationspunkts bedeutet hier, dass die Erhöhung des Kristallisationspunkts insbesondere nicht größer als 2,0°C ist. Der Kristallisationspunkt kann bestimmt werden, indem in einer DSC-Messung die Temperatur bestimmt wird, bei der eine Schmelze der Mischung gerade beginnt zu kristallisieren ($T_{K\,Onset}$). Der Kristallisationspunkt entspricht somit $T_{K\,Onset}$. Die Onset-Temperatur kann mittels DSC (Dynamischer Differenz-Kalorimetrie) ermittelt werden. Die entsprechenden DSC-Messungen zur Bestimmung der Onset-Temperatur werden nach der Norm ISO 11357 durchgeführt. Als Gerät eignet sich beispielsweise Mettler Toledo DSC 823.

Die erfindungsgemäßen Vorteile und Ausführungsformen werden nachfolgend verdeutlicht. In einer bevorzugten Ausführungsform der Erfindung weist das partikuläre Additiv einen mittleren Primärteilchendurchmesser in nm-Bereich auf. Der Begriff "nm-Bereich" bezieht sich auf einen Größenbereich von 1 nm bis 999 nm. Vorzugsweise weist das partikuläre Additiv einen mittleren Primärteilchendurchmesser von höchstens 500 nm, weiter bevorzugt höchstens 250 nm, weiter bevorzugt höchstens 100 nm und insbesondere höchstens 60 nm auf. Dadurch kann die unerwünschte Erhöhung des Kristallisationspunktes der Mischung aus den polymerbasierten Partikeln und dem partikulären Additiv im Vergleich zu dem Kristallisationspunkt einer Mischung aus den polymerbasierten Partikeln ohne dem partikulären Additiv minimiert oder verhindert werden.

Der Begriff "Primärteilchendurchmesser" bezieht sich in Abgrenzung von dem Durchmesser eines Agglomerates bzw. von Sekundärteilchen auf die Teilchengröße eines originären, nichtagglomerierten Teilchens. Das bedeutet, dass ein Agglomerat aus vielen Primärteilchen besteht, die die kleinste, nicht teilbare Einheit des Agglomerats darstellen. Ausgehend von Agglomeraten können Primärteilchen durch Behandlung einer Probe in einem Ultraschallbad erhalten werden. Der Primärteilchendurchmesser bezieht sich vorzugsweise auf den mittleren Durchmesser. Für die Zwecke der vorliegenden Erfindung ist der Primärteilchendurchmesser gemäß ASTM D3849 ermittelbar, insbesondere über morphologische Charakterisierung mittels Transmissionselektronenmikroskopie (TEM) gemäß ASTM D3849.

Zum Zweck der Bestimmung des Primärteilchendurchmessers eignet sich beispielsweise ein LEO 912 Omega: 120 kV TEM-Gerät mit einer Proscan Slow Scan CCD 1024 x 1024 Pixel Kamera und einem 460 Mesh Kupfer Grid mit Kohlenstofffilm. Die Bildanalyse kann mittels Olympus Soft Imaging Solutions "analySIS" erfolgen. Zur Probenpräparation können 8 mg einer Probe in einem Milliliter Isopropanol 5 min im Ultraschallbad dispergiert werden. Hieraus können wenige Tropfen entnommen und nochmal in einem Milliliter Isopropanol 5 min im Ultraschallbad dispergiert werden. Anschließend kann ein Tropfen der Lösung auf ein Kupfergrid aufgetropft werden. Die mikroskopische Untersuchung kann bei verschiedenen Vergrößerungen durchgeführt werden. Vorzugsweise kann die Untersuchung bei einer Mikroskopvergrößerung von 2.000-fach (incl. Nachvergrößerung der Kamera beträgt die Vergrößerung 40.000 -fach) erfolgen. Optional kann eine Überprüfung der Kalibrierung mittels eines Line Grating Grids mit definiertem Linienabstand und/oder ein Qualifikationstest basierend auf der TEM Oberfläche vorgenommen werden.

In einer bevorzugten Ausführungsform der Erfindung umfasst das partikuläre Additiv einen partikulären NIR-Absorber, oder besteht daraus, was für festes partikuläres Kohlenstoffmaterial zutrifft, insbesondere Ruß und/oder Graphit. Der Begriff "NIR-Absorber" kennzeichnet hier einen Stoff oder Stoffgemisch, der/das Nahinfrarot (NIR)-Strahlung zumindest teilweise absorbiert/absorbieren. Der Lesbarkeit wegen beziehen sich nachfolgende Ausführungen auf einen Stoff als NIR-Absorber. Entsprechendes gilt, wenn ein Stoffgemisch als NIR-Absorber verwendet wird. Erfindungsgemäß kann der NIR-Absorber Ruß umfassen, wobei bevorzugt ist, dass der NIR-Absorber Ruß ist und weitere NIR-Absorber nicht oder nur in geringem Maße vorhanden sind. Der Begriff "in geringem Maße" bedeutet, dass das Verhältnis der Absorption von Ruß zur Absorption der weiteren NIR-Absorber in zumindest einem Teil des NIR-Bereichs mindestens 2 oder 3, vorzugsweise mindestens 4 oder 5, weiter bevorzugt mindestens 6 oder 7 und insbesondere mindestens 8 oder 9 oder mindestens 10 beträgt. Der NIR-Absorber weist vorzugsweise eine Absorption bei mindestens einer der Wellenlängen 980±10 nm und/oder 940±10 nm und/oder 810±10 nm und/oder 640±10 nm auf.

Im Rahmen der vorliegenden Erfindung können grundsätzlich weitere geeignete Additive der Trockenmischung hinzugefügt werden, um dem Kunststoffpulver oder dem daraus hergestellten Formkörper vorteilhafte Eigenschaften zu verleihen, oder um bestimmte vorteilhafte Eigenschaften solcher Additive im Herstellungsverfahren zu nutzen. Um die Vorteile der vorliegenden Erfindung weitestgehend nutzen zu können, ist es jedoch bevorzugt, dass die Trockenmischung mindestens ein oder mehrere Additive aufweist, die (im eingesetzten Gewichtsanteil und der eingesetzten Partikelgröße) höchstens 70, 60 oder 50 %, vorzugsweise höchstens 40, 30 oder 20 % und insbesondere höchstens 15, 10 oder 5 % der NIR-Strahlung reflektiert. Dadurch wird erreicht, dass die NIR-Strahlung im Kunststoffpulver dem NIR-Absorber zur Hitzeentwicklung zur Verfügung steht und nicht ungenutzt reflektiert wird. Da Laserdioden deutlich weniger Energie als Standard-Laser (wie z.B. $CO_2$-Laser) liefern, kann auf diese Weise das Pulver überhaupt erst verarbeitet werden und die Energieeinsparung vorteilhaft genutzt werden.

Aus dem vorstehend beschriebenen Zusammenhang wird deutlich, dass das Kunststoffpulver in einer Ausführungsform der Erfindung durchaus Reflexionspartikel mit die NIR-Strahlung zumindest teilweise reflektierender Oberfläche umfassen kann. Durch diese Maßnahme können einerseits die mit bestimmten im IR-Bereich reflektierenden Stoffe verbundenen Vorteile und gleichzeitig die mit der vorliegenden Erfindung verbundenen Effekte ausgenutzt werden.

Das als Weißpigment bekannte Titandioxid wirkt beispielsweise als ein solches Reflexionspartikel. Die Verwendung von Titandioxid weist insbesondere im Zusammenhang der vorliegenden Erfindung unerwartete Vorteile auf. Dies wird nachfolgend beschrieben.

Wie eingangs beschrieben, sieht die vorliegende Erfindung die Verwendung NIR-Absorbers auf, um die Absorption im NIR-Wellenlängenbereich (bspw. <1 $\mu$m) zu erhöhen. Die Erfinder fanden heraus, dass Ruß ein sehr hohen Absorptionsvermögen und die Fähigkeit aufweist, die absorbierte Energie effizient in Wärme umzuwandeln. Im Falle eines universell einsetzbaren Materials sollte die Rußmenge möglichst gering sein, damit ein möglichst helles Bauteil erzeugt werden kann. Dadurch eignet sich das Bauteil besser für ein nachträgliches Färben vor allem mit hellen Farben.

Bei Kunststoffen werden naturbelassene Produkte mit bräunlich gebrochenem Weiß als naturfarben bezeichnet. Bei Verwendung von naturfarbenen Kunststoffen in einer Mischung mit Ruß stellten Die Erfinder fest, dass sich bei den daraus gedruckten Bauteilen ein inhomogener Farbeindruck ergibt. Die Bauteile wirken "fleckig".

Überraschend wurde festgestellt, dass Bauteile mit wesentlich homogenerem Farbeindruck erzeugt werden können, wenn dem naturfarbenen Kunststoff zuvor TiO$_2$ eingemischt wurde. Durch den Zusatz von Titandioxid können demnach auch bei der Verwendung von geringen Mengen an Ruß Bauteile mit einer homogenen Farbe erzielt werden. Demnach umfassen die Reflexionspartikel bevorzugt TiO$_2$. Vorzugsweise sind die Reflexionspartikel im Wesentlichen aus TiO$_2$ gebildet.

Vorzugsweise liegt der Gewichtsanteil der Reflexionspartikel am Gesamtgewicht des Kunststoffpulvers zwischen 0,5 % und 15,0 %, bevorzugt bei mindestens 0,5 % und/oder höchstens 5 %, insbesondere bei mindestens 0,5 % und/oder höchstens 2 %.

In einer bevorzugten Ausführungsform der Erfindung liegt das Kunststoffpulver in Form einer vorzugsweise homogenen Trockenmischung der polymerbasierten Partikel mit dem partikulären Additiv vor. In der bevorzugten Ausführungsform ist die Trockenmischung eine Mischung der polymerbasierten Partikel und dem partikulären Additiv, d.h. die Partikel des Additivs sind nicht, beispielsweise über eine Polymerschmelze oder durch gemeinsames Fällen aus eine Lösung oder auf eine andere Weise, in die polymerbasierten Partikel inkorporiert worden. Der Begriff "Trockenmischung" ist gleichbedeutend mit dem Begriff Dry-Blend und bezeichnet erfindungsgemäß ein Gemisch der polymerbasierten Partikel und Partikeln des partikulären Additivs. Optional kann die Trockenmischung zusätzlich ein oder mehrere weitere Stoffe umfassen, die optional im Dry-Blend-Verfahren vermischt und/oder ganz oder zumindest teilweise in die Kunststoffpartikel inkorporiert sein können.

Für die Zwecke der vorliegenden Erfindung wird eine Verteilung insbesondere als "homogen" angesehen, wenn in einer Vielzahl (bspw. 2, 3, 4, 5, 6, usw.) von Stichproben die kleinste NIR-Absorber-Konzentration von der größten NIR-Absorber-Konzentration um weniger als 30 %, vorzugsweise weniger als 20 %, weiter bevorzugt weniger als 10 % abweicht. Vorzugsweise werden die Stichproben aus einer Mischung von mindestens 1 g, insbesondere mindestens 5 g entnommen. Dadurch wird vorteilhafterweise eine ortsabhängig unterschiedliche Absorption der NIR-Strahlung vermieden. Die Prozessstabilität erhöht sich und im Ergebnis ergibt sich ein Formkörper mit verbesserten mechanischen Eigenschaften.

Das erfindungsgemäße Pulver ist erhältlich, indem die polymerbasierten Partikel mit den Partikeln des NIR-Absorbers und ggf. weiteren Additiven in einem Mischschritt in dem entsprechenden Mischungsverhältnis vermengt werden, so dass der festgelegte Gewichtsanteil eingestellt ist. Der Mischvorgang erfolgt zweckmäßig in einem einstufigen Verfahren durch:

(i) Bereitstellen der polymerbasierten Partikeln und der Partikeln des NIR-Absorbers und

(ii) Trockenes Vermischen zumindest der polymerbasierten Partikeln und der Partikel des NIR-Absorbers.

Hierfür eignet sich beispielsweise ein Containermischer der Firma Mixaco CM150-D mit Standard-Flügelaufbau: 1 Bodenräumer und 1 Dispersionsflügel (Flügel mit einem Durchmesser von 400 mm) mit dem ein zweistufiges Mischen mit 2 min bei 516 U/min und 4 min bei 1000 U/min erfolgen kann.

Der Mischvorgang kann jedoch auch mit mehreren Mischschritten (mehrstufiges Verfahren) erfolgen:

(i) Bereitstellen einer ersten Trockenmischung (sog. Masterbatch) durch trockenes Vermischen von zumindest polymerbasierten Partikeln und Rußpartikeln mit einem ersten Anteil an Rußpartikeln,

(ii) Zugabe von weiteren polymerbasierten Partikeln zur ersten Trockenmischung, um eine zweite Trockenmischung mit einem zweiten, relativ zum ersten Anteil geringeren Anteil an Rußpartikeln zu erhalten,

(iii) gegebenenfalls weitere separate Zugabeschritte von jeweils weiteren polymerbasierten Partikeln zu der zweiten und gegebenenfalls weiteren Trockenmischung(en), um jeweils zunehmend weiter verringerte Anteile an Rußpartikeln zu erhalten. Optional kann die Trockenmischung in mindestens einer der Stufen (i) und (ii) und gegebenenfalls der optionalen Stufe (iii) und/oder nach Abschluss der Zugabeschritte mindestens einmal gesiebt werden, bevorzugt durch ein Sieb der Maschenweite 125 $\mu$m. Der Mischvorgang in einer Stufe oder in mehreren Stufen erfolgt mit der Maßgabe, dass nach Abschluss des Zugabeschritts (ii) bzw. der Zugabeschritte (iii) der Gewichtsanteil des Ruß am Gesamtgewicht von polymerbasierten Partikel und Rußpartikel im festgelegten Bereich liegt.

Erstaunlicherweise hat sich herausgestellt, dass die Homogenität bei dem einstufigen Verfahren besser ist als beim mehrstufigen Verfahren. Das einstufige Verfahren stellt demnach die bevorzugte Ausführungsform unter den beiden Möglichkeiten dar. Die Erfindung wendet sich also davon ab, das Kunststoffpulver mittels Masterbatch-Verfahrens bereitzustellen und vielmehr dazu hin, die gesamte Menge Kunststoffpulver in einem einzigen Prozessschritt, also in einem Single Batch Verfahren, bereitzustellen. Zu den Vorteilen des Single Batch Verfahrens zählen neben einer homogeneren Verteilung des NIR-Absorbers im Pulver insbesondere auch ein einfacherer und kosteneffizienterer Prozess, da nur ein Schritt erfolgen muss.

In einer bevorzugten Ausführungsform der Erfindung ist das partikuläre Additiv Gasruß. Vorzugsweise weist der Gasruß einen mittleren Primärteilchendurchmesser im Bereich von 1 bis 50 nm, bevorzugt eine mittleren Primärteilchendurchmesser von mindestens 5 nm und/oder höchstens 47 nm, weiter bevorzugt von mindestens 10 nm und/oder höchstens 30 nm, insbesondere von mindestens 15 nm und/oder höchstens 25 nm.

Vorteilhafterweise verbessert sich durch eine derartige Auswahl des mittleren Primärteilchendurchmessers die Prozessstabilität und/oder Formkörperqualität. Darüber hinaus können Verbesserungen in der Fluidisierbarkeit und/oder der Beschichtungsqualität sowie ein konstantes Beschichtungsverhalten und/oder ein ausreichend großes Prozessfenster erzielt werden. Als Prozessfenster ist der Temperaturbereich zwischen der Kristallisationstemperatur (TK) und der Schmelztemperatur (TM) definiert. Überraschenderweise wurde im Rahmen der Erfindung gefunden, dass die genannten Verbesserungen mit dem mittleren Primärteilchendurchmesser in Beziehung stehen, unabhängig davon, in welchem Ausmaß bzw. zu welchen Grad die originären Primärteilchen beim Vermengen mit den polymerbasierten Partikeln desagglomeriert wurden.

Als Beschichtungsqualität wird eine gleichmäßig dichte Beschichtung der Fläche ohne Bereiche mit sichtbar niedrigerer Schüttdichte bezeichnet, unabhängig davon, ob sich unter der beschichteten Pulverschicht Pulver oder ein vorher aufgeschmolzenes Baumaterial befindet. Als konstantes Beschichtungsverhalten wird ein stabiles Beschichtungsverhalten über die Dauer eines gesamten Baujobs über gegebenenfalls mehrere Stunden bezeichnet. Ein Baujob bezeichnet das Bauen eines Jobs, wobei ein Job die Zusammenstellung positionierter und parametrierter Bauteile in der Software ist.

In einer bevorzugten Ausführungsform der Erfindung beträgt der Gewichtsanteil des partikulären Additivs am Gesamtgewicht von polymerbasierten Partikeln und partikulärem Additiv 0,01 % bis 5 %, bevorzugt mindestens 0,02 % und/oder höchstens 2%, weiter bevorzugt höchstens 1 %, noch weiter bevorzugt höchstens 0,45 %.

In einer bevorzugten Ausführungsform der Erfindung ist das Polymer der polymerbasierten Partikel ein thermoplastisches und/oder semi-kristallines Polymer.

Grundsätzlich ist die vorliegende Erfindung nicht auf bestimmte polymerbasierte Kunststoffe beschränkt. Geeignete Polymerbasis können aus der aus Homopolymeren, Copolymeren und Polyblends (auch bekannt als Polymer-Blends) bestehenden Gruppe ausgewählt werden. Unter einem Polyblend (auch als "Polymerblend" bezeichnet) wird eine Mischung aus zwei oder mehreren unterschiedlichen Polymeren verstanden. Bei einem Polyblend kann es sich um ein einphasiges Polyblend (homogenes Polyblend) oder mehrphasiges Polyblend (heterogenes Polyblend) handeln. Bei einem mehrphasigen Polyblend werden mittels dynamischer Differenzkalorimetrie typischerweise mehrere Glasübergänge beobachtet. Ferner können bei einem mehrphasigen Polyblend mittels dynamischer Differenzkalorimetrie mehrere Schmelzpeaks entsprechend den Schmelzpunkten der einzelnen Phasen beobachtet werden.

Das Polymer kann aus Polyaryletherketon (PAEK), Polyarylethersulfon (PAES), Polyamiden, Polyestern, Polyethern, Polylactiden (PLA), Polyolefinen, Polystyrolen, Polyphenylensulfiden, Polyvinylidenfluoriden, Polyphenylenoxiden, Polyimiden, Polyetherimiden, Polycarbonaten, und Copolymeren, die mindestens eines der vorangehenden Polymere bzw. deren Monomereinheiten einschließen, sowie Polymerblends einer oder mehrerer der genannten Polymere oder Copolymere davon, ausgewählt werden, wobei die Auswahl jedoch nicht auf die oben genannten Polymere sowie Copolymere und Polymerblends davon beschränkt ist. Der Begriff "Polymere" kann auch Oligomere mit zyklischer oder ringförmiger molekularer Struktur umfassen. Ein Beispiel für ein derartiges Oligomer stellt CBT (cyclic butylen terephtalate) zur Herstellung von PBT (Polybutylenterephtalat) dar.

Geeignete PAEK-Polymere und -Copolymere beispielsweise werden aus der aus Polyetheretherketon (PEEK), Polyetherketonketon (PEKK), Polyetherketon (PEK), Polyetheretherketonketon (PEEKK), Polyetherketonetherketonketon (PEKEKK), Polyaryletheretheretherketon (PEEEK) und Copolymeren, die mindestens eines der vorgenannten Polymere einschließen, bestehenden Gruppe ausgewählt.

Geeignete Polyamid-Polymere oder -Copolymere können aus der Gruppe ausgewählt werden, die aus Polamid 6/6T, Polyamidelastomeren wie Polyetherblockamide wie z.B. PEBAX™-basierte Materialien, Polyamid 6, Polyamid 66, Polyamid 11, Polyamid 12, Polyamid 612, Polyamid 610, Polyamid 1010, Polyamid 1012, Polyamid1212, Polyamid PA6T/66, PA4T/46 und Copolymeren, die mindestens eines der vorgenannten Polymere einschließen besteht. Geeignete Polyesterpolymere oder Copolymere können aus der aus Polyalkylenterephthalaten (z.B. PET, PBT) und deren Copolymeren ausgewählt werden.

Geeignete Polyolefinpolymere oder -Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Geeignete Polyimidpolymere oder -Copolymere können aus der aus Polyarylamid, Polybismaleinimid und insbesondere Polyetherimid bestehenden Gruppe ausgewählt werden.

In einer bevorzugten Ausführungsform der Erfindung umfassen die Polymerpartikel als Polymermaterial zumindest ein Polymer, das ausgewählt ist aus zumindest einem Polyaryletherketon (PAEK), Polyarylethersulfon (PAES), Polyamid, Polyester, Polyether, Polylactid, Polyolefin, Polystyrol, Polyphenylensulfid, Polyvinylidenfluoride, Polyphenylenoxid, Polyimid, Polyetherimid, Polycarbonat, bevorzugt aus Polyamid, weiter bevorzugt aus Polyamid 12, Polyamid 11 und/oder Polyamid 1012 und/oder zumindest einem Copolymer, das mindestens eines der vorangehenden Polymere bzw. deren Monomereinheiten einschließt, und/oder zumindest einem Polymerblend, das zumindest eines der genannten Polymere oder Copolymere umfasst. Bevorzugt ist das Polymer Polyamid, weiter bevorzugt Polyamid 12, Polyamid 11 und/oder Polyamid 1012.

In einer Ausführungsform der Erfindung umfassen die polymerbasierten Partikel als Polymermaterial Polymere oder Copolymere oder Blends von PAEK, Polyamid oder Polyetherimid, wobei das PAEK bevorzugt PEEK, PEKK, PEK, PEEKK, PEKEKK und/oder PEEEK ist und das bevorzugte Polyamid Polyamid 12 und/oder Polyamid 11 ist. Ferner genügen die aus diesen Polymermaterialien gefertigten Formkörper den hohen Anforderungen, die bezüglich der mechanischen Beanspruchung gestellt werden.

Die vorliegende Erfindung eignet sich auch für den Einsatz von Polyblends.

Falls das Polymer die Eigenschaft aufweist, elektromagnetische Strahlung zumindest in einem Teil des NIR-Bereichs nicht oder nur in geringem Maße zu absorbieren, umfasst das partikuläre Additiv vorzugsweise einen partikulären IR-Absorber oder besteht aus einem partikulären IR-Absorber. Wie eingangs erwähnt trifft dies auf die meisten Polymere zu. Mit dem Begriff "in geringem Maße" ist gemeint, dass die Absorption des im Überschuss vorliegenden polymerbasierten Partikels deutlich kleiner als die Absorption des NIR-Absorbers ist. Beispielsweise beträgt das Verhältnis der Absorption des NIR-Absorbers zu der Absorption der polymerbasierte Partikel in zumindest einem Teil des NIR-Bereichs (bspw. bei einer oder mehrerer der Wellenlängen $(980 \pm 7)$ nm und/oder $(940 \pm 7)$ nm und/oder $(810 \pm 7)$ nm und/oder $(640 \pm 7)$ nm) mindestens 2 oder 3, vorzugsweise mindestens 4 oder 5, weiter bevorzugt mindestens 6 oder 7 und insbesondere mindestens 8 oder 9 oder mindestens 10.

Hinsichtlich der Korngröße der polymerbasierten Partikel gibt es keine über die auf dem Gebiet des Lasersinterns üblichen hinausgehenden Einschränkungen. Geeignete mittlere Korngrößen $d_{50}$ liegen bei mindestens 10 $\mu$m, bevorzugt mindestens 20 $\mu$m, besonders bevorzugt mindestens 30 $\mu$m und/oder höchstens 150 $\mu$m, bevorzugt höchstens 100 $\mu$m oder 90 $\mu$m, besonders bevorzugt höchstens 80 $\mu$m, insbesondere bei mindestens 40 $\mu$m und/oder höchstens 70 $\mu$m.

Ein weiterer Aspekt der vorliegenden Erfindung ist ein Verfahren zur Herstellung des speziellen erfindungsgemäßen Kunststoffpulvers. Das Pulver soll insbesondere zur Verwendung in einem Verfahren zur additiven Herstellung eines Formkörpers, insbesondere durch selektives Verfestigen eines pulverförmigen Aufbaumaterials an den dem Querschnitt des Formkörpers in der jeweiligen Schicht entsprechenden Stellen insbesondere durch Einwirkung von Strahlung dienen. Erfindungsgemäß umfasst das Verfahren zumindest die folgenden Schritte:

(i) Bereitstellen der polymerbasierten Partikel,
(ii) Bereitstellen der Partikel des partikulären Additivs, und
(iii) Trockenes Vermischen zumindest der polymerbasierten Partikel und der Partikel des partikulären Additivs.

Optional können weitere Additive wie z.B. TiOz zusammen mit den polymerbasierten Partikeln und den Partikeln des partikulären Additivs vermischt werden.

Optional kann nach Schritt (iii) ein Verpacken des Kunststoffpulvers, vorzugsweise unter Ausschluss von Feuchtigkeit, erfolgen.

In einer bevorzugten Ausführungsform werden die polymerbasierten Partikel mit den Partikeln des partikulären Additivs und ggf. weiteren Additiven in einem einstufigen Verfahren in dem gewünschten Mischungsverhältnis vermischt, so dass der festgelegte Gewichtsanteil eingestellt ist. Der Mischvorgang kann jedoch auch wie oben beschrieben mit mehreren Mischschritten (mehrstufiges Verfahren) erfolgen. Wie ebenfalls oben ausgeführt, ist die Homogenität beim einstufigen Verfahren besser als beim mehrstufigen Verfahren.

In einer vorteilhaften Ausgestaltung ist die Mischung aus Polymer und partikulärem Additiv homogen. Eine besonders gute Homogenität wird durch das hier offenbarte einstufige Mischverfahren erzielt.

Ein weiterer Aspekt der vorliegenden Erfindung ist ein Formkörper bzw. ein dreidimensionales Objekt, welches durch selektives Verfestigen eines pulverförmigen Aufbaumaterials an den dem Querschnitt des dreidimensionalen Objekts in der jeweiligen Schicht entsprechenden Stellen durch Einwirkung von Strahlung, bevorzugt durch Einwirkung von NIR-Strahlung hergestellt wurde. NIR-Strahlung ist nicht zwingend notwendig, jedoch bevorzugt. Das Pulver lässt sich grundsätzlich auch durch andere Schichtbauverfahren verarbeiten und bietet hier unerwartet die gleichen Vorteile.

Der Formkörper weist zumindest eines oder beide der nachfolgenden Merkmale auf:

(a) mikroskopisch beobachtete kristalline Bereiche in Form von Sphärolithen mit einer Sphärolithgröße von mindestens 20 μm,

(b) einen Bauverzug $\Delta(h_{mitte}-h_{links}) + \Delta(h_{mitte}-h_{rechts})$ von <0,5 mm, vorzugsweise ≤0,25 mm, weiter bevorzugt ≤0,2 mm.

Um den Verzug zu bestimmen, kann ein Quader (bspw. mit den Maßen 250mm x 6 mm x 21 mm) gebaut werden. Als Maß für den Bauverzug (Verzug während des Bauvorganges) wird die Differenz in der Höhe des Quaders zwischen den Messpunkten am Rand und einem Messpunkt in der Mitte (im Beispiel: x = 125 mm) des Quaders in Bezug auf die tatsächliche Höhe des Quaders in der Mitte in Prozent angegeben, wobei die Höhe der Quaders in der Mitte üblicherweise größer ist als an den Rändern.

Als Maß für den Abkühlverzug (Verzug nach dem Bauvorgang, resultiert im Gegensatz zum Bauverzug nicht in fehlendem Material) wird die Krümmung der Unterseite des Bauteils in der Mitte des Bauteils (im Beispiel: x= 125 mm) angegeben, wobei die Form der gekrümmten Unterseite mathematisch mit einer Parabel angenähert wird.

Dabei gilt: $f(x)=ax^2$, mit a=0 für ein nicht verzogenes Bauteil.

Die Krümmung eines Graphen ist definiert als $\kappa(x)=((\partial^2 f(x))/\partial x^2)/[(1+(\partial f(x)/\partial x)^2)]^{(3/2)}$ In der Mitte des Bauteils, das dem Scheitel der Parabel entspricht, gilt demnach: x(0)=2a.

In einer bevorzugten Ausführungsform diente als Aufbaumaterial vorzugsweise das erfindungsgemäße Kunststoffpulver.

Das erfindungsgemäße Kunststoffpulver eignet sich für herkömmliche Lasersinterverfahren mittels $CO_2$-Laser sowie für Verfahren, die auf kurzwelligerer Strahlung, bspw. NIR-Strahlung, basieren als auch für andere *Additive Manufacturing*-Verfahren wie Multi Jet Fusion von HP. Überraschenderweise bietet die Zugabe der Partikel des partikulären Additivs in beiden Verfahren die gleichen Vorteile.

Durch Verwendung des erfindungsgemäßen Kunststoffpulvers als Aufbaumaterial ergeben sich zusätzlich zu den vorgenannten Vorteilen nachfolgende Effekte, die gleichsam eine bevorzugte Ausführungsform der Erfindung darstellen. Demnach weist in einer bevorzugten Ausführungsform der Formkörper mindestens eine und bevorzugt eine Kombination von zwei oder mehreren, weiter bevorzugt allen nachfolgend definierten Eigenschaften auf:

(i) Eine Zugfestigkeit von mindestens 40 MPa, vorzugsweise mindestens 48 MPa;
(ii) Einen E-Modul von mindestens 1600 MPa; vorzugsweise mindestens 1700 MPa;
(iii) Eine Bruchdehnung von mindestens 2,5 %; vorzugsweise mindestens 3,0 %.

Die Bestimmung der Zugfestigkeit, E-Modul und Bruchdehnung erfolgte gemäß EN ISO 527. Dabei wurden Probekörper vom Typ 1BB verwendet. Der Konditionierungszustand hat relevante Einflüsse auf die Messergebnisse der mechanischen Eigenschaften wie Zugfestigkeit, E-Modul und Bruchdehnung. Die mechanischen Eigenschaften der Probekörper wurden in trockenem Zustand ermittelt, wobei die Prüfung maximal 3 Stunden nach dem Entpacken der Bauteile stattfand. Als bevorzugtes Prüfklima für die Ermittlung der mechanischen Eigenschaften wird gemäß ISO 291 eine Temperatur von (23±2) °C und eine relative Luftfeuchte von (50±10) % angewandt. Dieses Prüfklima sollte bei der Ermittlung der mechanischen Eigenschaften eingehalten werden. Gemäß EN ISO 527-1 sollen die Prüfgeschwindigkeiten zwischen den interessierten Parteien vereinbart werden. Es wurde eine Prüfgeschwindigkeit von 50 mm/s verwendet.

Um das Verfahren wirtschaftlicher und umweltverträglicher zu gestalten, kann ein Teil des in einem vorangegangenen Herstellungszyklus übriggebliebenen, unverfestigten Aufbaumaterials ("Altpulver") in einem nachfolgenden Zyklus wiederverwendet werden. Dazu wird das Altpulver mit frischem Pulvergemisch ("Neupulver") in einem vorbestimmten Verhältnis miteinander gemischt. In einer bevorzugten Ausführungsform weist das Aufbaumaterial also einen Anteil Altpulver, welches zuvor beim Herstellen eines Formkörpers als unverfestigtes Aufbaumaterial übriggeblieben ist, und einen Anteil Neupulver, das zuvor noch nicht beim Herstellen eines Objekts verwendet worden ist, auf. Vorzugsweise beträgt der Anteil an Neupulver höchstens 70 Gewichtsprozent, insbesondere höchstens 60, 50 oder gar 40 Gewichtsprozent.

Ein weiterer Aspekt der vorliegenden Erfindung stellt ein System dar, welches zur Herstellung von dreidimensionalen Objekten durch selektives Verfestigen des erfindungsgemäßen pulverförmigen Aufbaumaterials an den dem Querschnitt des dreidimensionalen Objekts in der jeweiligen Schicht entsprechenden Stellen durch Einwirkung von Strahlung, bevorzugt von NIR-Strahlung dient. Erfindungsgemäß weist das System mindestens eine Strahlungsquelle, die ausgebildet ist, um elektromagnetische Strahlung, insbesondere spezifisch in einer im NIR gelegenen Wellenlänge oder Wellenlängenbereich, zu emittieren, eine Prozesskammer, die als offener Behälter mit einer Behälterwandung ausgeführt ist, einen in der Prozesskammer befindlichen Träger, wobei Prozesskammer und Träger gegeneinander in vertikaler Richtung beweglich sind, einen Vorratsbehälter und einen in horizontaler Richtung bewegbaren Beschichter auf. Der Vorratsbehälter ist zumindest teilweise mit dem erfindungsgemäßen Kunststoffpulver als Aufbaumaterial befüllt.

In einer bevorzugten Ausführungsform der Erfindung wird die elektromagnetische Strahlung spezifisch im NIR-Bereich innerhalb eines Fensters (λ2 - λ1) von nicht mehr als 50 nm (λ2 - λ1 ≤ 50 nm), vorzugsweise nicht mehr als 40 nm, weiter bevorzugt nicht mehr als 30 nm und insbesondere nicht mehr als 20 nm emittiert. Dadurch ist es möglich, dass das erfindungsgemäße Kunststoffpulver weitere Stoffe umfassen kann, die aufgrund ihres Absorptions- oder Reflexionsvermögens in einem ersten Teilbereich des NIR-Bereichs stören würden. Durch Wahl eines relativ engen Wellenbereichs außerhalb des ersten Teilbereichs kann der störende Einfluss verringert oder verhindert werden.

In einer bevorzugten Ausführungsform ist die Strahlungsquelle dazu ausgebildet, elektromagnetische Strahlung spezifisch in einer im NIR gelegenen Wellenlänge oder Wellenlängenbereich zu emittieren. In einer bevorzugten Ausführungsform der Erfindung emittiert die Strahlungsquelle elektromagnetische Strahlung spezifisch bei einer oder mehreren Wellenlängen im Bereich von 500 bis 1500 nm, insbesondere bei einer oder mehreren der nachfolgenden Wellenlängen: (980±10) nm und/oder (940±10) nm und/oder (810 ±10) nm und/oder (640±10) nm. Bevorzugt emittiert die Strahlungsquelle bei (980±10) nm und/oder (940±10) nm.

In einer bevorzugten Ausführungsform der Erfindung umfasst die Strahlungsquelle mindestens einen Laser, vorzugsweise eine oder mehrere Laserdioden. Die Laserdioden können dabei zeilenförmig oder versetzt angeordnet. Ebenso ist es möglich, die Laserdioden in einem 2-dimensionalen Array anzuordnen. Es kann sich um einen Kantenemitter handeln. Vorzugsweise handelt es sich um einen Oberflächenemitter (VCSEL oder Philips-VCSEL). Durch eine Zeilenbelichtung lassen sich hohe Baugeschwindigkeiten erzielen. Zudem ermöglicht die Verwendung von Laserdioden einen hohen Wirkungsgrad und senkt die Energiekosten.

Zum schichtweisen Aufschmelzen des erfindungsgemäßen Polymerpulvers werden passende Verfahrens- bzw. Systemparameter ausgewählt. Neben dem einzustellenden Anteil des NIR-Absorbers werden insbesondere die Schichtdicke, die Laserleistung und die Belichtungsgeschwindigkeit sowie die Wellenlänge des Lasers gezielt ausgewählt.

Geeignete Laserdioden arbeiten üblicherweise mit einer Leistung zwischen 0,1 und 500 Watt, bevorzugt mit mindestens 1,0 Watt und/oder höchstens 100 Watt. Der Fokus des Laserstrahls kann einen Radius zwischen 0,05 mm und 1 mm, bevorzugt von mindestens 0,1 mm und/oder höchstens 0,4 mm haben. Die Belichtungsgeschwindigkeit, d.h. die Geschwindigkeit des Laserfokus relativ zur Bauebene, beträgt üblicherweise zwischen 10 mm/s und 10000 mm/s, bevorzugt mindestens 300 mm/s und/oder höchstens 5000 mm/s.

Im Rahmen der vorliegenden Erfindung haben die Begriffe "umfassend" oder "enthaltend" sowie deren grammatikalischen Abwandlungen nachfolgende Bedeutungen: In einer Ausführungsform können neben den genannten Elementen weitere Elemente enthalten sein. In einer anderen Ausführungsform sind im Wesentlichen nur die genannten Elemente enthalten. Mit anderen Worten können die Begriffe neben ihrer herkömmlichen Bedeutung in einer besonderen Ausführungsform gleichbedeutend mit dem Begriff "im Wesentlichen bestehend aus" oder "bestehend aus" sein.

Fig. 1 zeigt beispielhaft eine Lasersintervorrichtung zur schichtweisen Herstellung eines dreidimensionalen Objektes.

Fig. 2 zeigt eine vergrößerte Aufnahme einer abgekühlten Schmelze von PA 12. Es sind große Sphärolite sichtbar.

Fig. 3 zeigt eine vergrößerte Aufnahme einer abgekühlten Schmelze einer Mischung von PA 12 und Industrieruß am Beispiel Monarch® 570. Es sind viele kleine Sphärolite sichtbar.

Fig. 4 zeigt DSC Iso-Kurven und Umsätze von Mischungen aus Polymerpartikeln und verschiedenen Rußtypen.

Fig. 5 zeigt aus den DSC Iso-Kurven und Umsätze der Fig. 5 ermittelten Werte für $t_{peak}$ [min] und $t_{1/2}$ [min] und $\alpha$ [%] Umsatz.

Fig. 6 zeigt eine vergrößerte Aufnahme einer abgekühlten Schmelze von PA 12. Es sind große Sphärolite sichtbar.

Fig. 7 zeigt eine vergrößerte Aufnahme einer abgekühlten Schmelze einer Mischung von PA 12 und Industrieruß am Beispiel Monarch® 570. Es sind viele kleine Sphärolite sichtbar.

Fig. 8 zeigt eine vergrößerte Aufnahme einer abgekühlten Schmelze einer Mischung von PA 12 und Gasruß am Beispiel Spezialschwarz 4. Die Sphärolitgröße ist mit der der Schmelze von Fig. 2 und 7 vergleichbar.

Die nachfolgenden Beispiele dienen zur Veranschaulichung und sind nicht als einschränkend zu verstehen. Sie definieren weitere bevorzugte Ausführungsformen der Erfindung.

**Beispiele**

**Ausführungsbeispiel 1**

Es wurden Mischungen aus polymerbasierten Partikeln und verschiedenen Arten partikulärer Additive hergestellt. Als partikuläre Additive wurden verschiedene Typen partikulären Kohlenstoffmaterials getestet, wobei entsprechende Tests gleichfalls mit anderen partikulären Additiven durchgeführt werden können. Die polymerbasierten Partikel waren bei allen Mischungen identisch und waren als repräsentatives Beispiel aus PA 2201. Sie wiesen hohe Sphärizität auf und hatten einen d50-Wert von 50-62 $\mu$m. PA 2201 wurde beispielhaft für polymerbasierte Partikel auf Basis von PA12 verwendet.

Als Typen partikulären Kohlenstoffmaterials wurden verschiedene kommerzielle Produkte verwendet, die Industrieruß oder Graphit enthielten. Folgende Typen wurden verwendet:

- Gasruß: Spezialschwarz 4, Spezialschwarz 5, Spezialschwarz 6
- Flammruß: Flammruß 101, Monarch 570, Mogul L, Printex 200, Printex G, Printex XE-2B; Ensaco 150 P, Arosperse 15
- Graphit: Timrex SFG 6 Graphite

Durch die verschiedenen Herstellungsverfahren ergeben sich deutlich unterschiedliche Korngrößenverteilungen (KGV). Flammruß weist eine breite KGV und Gasruß eine enge KGV auf. Gasruße haben meist oxidierte Oberflächen.

Die Mischungen wurden homogen mittels Containermischer der Firma Mixaco CM150-D mit Standard-Flügelaufbau: 1 Bodenräumer und 1 Dispersionsflügel (Flügel mit einem Durchmesser von 400 mm) mit dem ein zweistufiges Mischen mit 2 min bei 516 U/min und 4 min bei 1000 U/min vermischt und anschließend einer DSC-Messung unterzogen. Die DSC-Messung wurde nach der Norm ISO 11357 mit einem Mettler Toledo DSC 823 durchgeführt.

Anschließend wurde die Kristallisationstemperatur bestimmt. Die Ergebnisse sind in der nachfolgenden Tabelle 1 dargestellt.

Tab. 1: Kristallisationstemperaturen von Mischungen aus Polymerpartikeln und verschiedenen Typen partikulären Kohlenstoffmaterials.

| Zusammensetzung / Angaben zu Bestandteilen | Differential Scanning Calorimetry (DSC), 20 K/min | |
|---|---|---|
| | 1te Abkühlung Kristallisationstemperatur | |
| | Onset [°C] | Extrapolierter Peak [°C] |
| PA 2201 + 0,09 Gew.% Monarch® 570 | 150,71 151,02 | 145,27 145,43 |
| PA 2201 + 0,09 Gew.% Mogul L | 148,24 148,31 | 144,18 144,02 |
| PA 2201 + 0,09 Gew.% Spezialschwarz 4 | 143,77 144,03 | 139,59 139,85 |
| PA 2201 + 0,09 Gew.% Printex 200 | 150,81 150,53 | 145,33 145,08 |
| PA 2201 + 0,09 Gew.% Printex G | 150,40 150,12 | 145,20 144,89 |
| PA 2201 + 0,09 Gew.% Flammruß 101 | 150,39 150,34 | 144,80 144,77 |
| PA 2201 + 0,09 Gew.% Ensaco 150 P | 150,85 151,10 | 145,16 145,27 |
| PA 2201 + 0,09 Gew.% Timrex SFG 6 Graphite | 150,67 150,52 | 145,21 145,36 |
| PA 2201 + 0,09 Gew.% Printex XE-2B | - - | 146,73 146,53 |
| PA 2201 | - | 139,26 |

(fortgesetzt)

| Zusammensetzung / Angaben zu Bestandteilen | Differential Scanning Calorimetry (DSC), 20 K/min | |
| --- | --- | --- |
| | 1te Abkühlung Kristallisationstemperatur | |
| | Onset [°C] | Extrapolierter Peak [°C] |
| + 0,09 Gew.% Arosperse 15 | - | 139,03 |

Die Ergebnisse zeigen, dass die gasrußhaltige Mischung die niedrigste Kristallisationstemperatur der Testreihe aufwies. Da sich die Mischungen nur im Typ des partikulären Kohlenstoffmaterials unterschieden, folgt daraus, dass Gasruß zur geringsten Erhöhung der Kristallisationstemperatur geführt hat.

**Ausführungsbeispiel 2**

Es wurden Mischungen aus Polymerpartikeln und verschiedenen Rußtypen hergestellt. Die Polymerpartikel waren identisch zu den im Ausführungsbeispiel 1 verwendeten Partikeln. Als Rußtypen wurden verschiedene kommerzielle Produkte verwendet, die Industrieruß enthielten. Diese unterschieden sich insbesondere durch ihre Partikelgrößenverteilung.

Die Mischungen wurden homogen vermischt und einer DSC-Messung wie in Beispiel 1 beschrieben unterzogen. Anschließend wurde die Kristallisationstemperatur bestimmt. Die Ergebnisse sind in der nachfolgenden Tabelle 2 dargestellt.

Tab. 2: Kristallisationstemperaturen von Mischungen aus Polymerpartikeln und verschiedenen Rußtypen.

| Zusammensetzung / Angaben zu Bestandteilen | Differential Scanning Calorimetry (DSC), 10 K/min | | | |
| --- | --- | --- | --- | --- |
| | 1te Abkühlung Kristallisationstemperat ur | | 2te Abkühlung Kristallisationstemperat ur | |
| | Onset [°C] | Extrapolie rter Peak [°C] | Onset [°C] | Extrapolie rter Peak [°C] |
| PA 2200 | 148,87<br>148,84 | 144,43<br>144,40 | 147,24<br>147,27 | 142,51<br>142,54 |
| PA 2200 + 0,09 Gew.% Monarch® 570 | 154,54<br>154,29<br>154,62 | 150,56<br>150,52<br>150,58 | 153,04<br>152,88<br>153,09 | 149,27<br>149,23<br>149,30 |
| PA 2200 + 0,09 Gew.% Spezialschwarz 4 | 148,90<br>148,89<br>148,22<br>148,30<br>148,05<br>148,10<br>148,25<br>148,11 | 145,30<br>145,27<br>144,91<br>145,04<br>144,81<br>144,89<br>144,88<br>144,88 | 147,38<br>147,42<br>146,80<br>146,82<br>146,55<br>146,60<br>146,65<br>146,80 | 143,64<br>143,64<br>143,33<br>143,41<br>143,12<br>143,18<br>143,16<br>143,20 |
| PA 2200 + 0,09 Gew.% Spezialschwarz 5 | 147,67<br>147,49<br>147,62 | 143,46<br>143,33<br>143,50 | -<br>-<br>- | -<br>-<br>- |
| PA 2200 + 0,09 Gew.% Spezialschwarz 6 | 147,67<br>148,01<br>147,99 | 143,91<br>144,21<br>144,16 | -<br>-<br>- | -<br>-<br>- |

Die Ergebnisse zeigen, dass die Gasruß-haltige Mischungen die niedrigste Kristallisationstemperatur der Testreihe aufwiesen. Dadurch wird für weitere Gasrußtypen bestätigt, dass Gasruß zur geringsten Erhöhung der Kristallisationstemperatur führt.

**Ausführungsbeispiel 3**

Ausgewählte Mischungen der vorgenannten Ausführungsbeispiele wurden als Aufbaumaterial in einem selektiven Lasersinterprozess verwendet.

In einem hier nicht näher beschriebenen Versuch wurde bestätigt, dass sich das erfindungsgemäße Aufbaumaterial grundsätzlich auf einer herkömmlichen mit einer $CO_2$-Laserquelle versehenen Lasersintermaschine wie beispielsweise einer EOS P 396 der Fa. EOS Electro Optical Systems mit den vom Hersteller beschriebenen Standardeinstellungen verwenden lässt. Im vorliegenden Versuch wurde anstelle eines $CO_2$-Lasers eine Lichtquelle verwendet, die NIR-Laserdioden umfassen. Für weitere Details zur Hardware und geeigneten Einstellungen wird auf die Europäische Patentanmeldung EP14824420.5, veröffentlicht als EP 3 079 912, verwiesen.

Anschließend der Verzug der erhaltenen Bauteile bestimmt. Um den Verzug zu quantifizieren, wurde ein Quader der Maße 250mm x 6 mm x 21 mm im hinteren Teil des Bauraumes gebaut. Als Maß für den Bauverzug (Verzug während des Bauvorganges) wird die Differenz in der Höhe des Quaders zwischen den Messpunkten am Rand und einem Messpunkt in der Mitte (x = 125 mm) des Quaders in Bezug auf die tatsächliche Höhe des Quaders in der Mitte in Prozent angegeben, wobei die Höhe der Quaders in der Mitte üblicherweise größer ist als an den Rändern.

Als Maß für den Abkühlverzug (Verzug nach dem Bauvorgang, resultiert im Gegensatz zum Bauverzug nicht in fehlendem Material) wird die Krümmung der Unterseite des Bauteils bei x= 125 mm (Mitte des Bauteils) angegeben, wobei die Form der gekrümmten Unterseite mathematisch mit einer Parabel angenähert wird.

Dabei gilt: $f(x)=ax^2$, mit a=0 für ein nicht verzogenes Bauteil.

Die Krümmung eines Graphen ist definiert als $\kappa(x)=((\partial^2 f(x))/\partial x^2)/[(1+(\partial f(x)/\partial x)^2)]^{(3/2)}$ In der Mitte des Bauteils, das dem Scheitel der Parabel entspricht, gilt demnach: x(0)=2a.

Die Ergebnisse sind in der nachfolgenden Tabelle 3 dargestellt.

Tab. 3: Verzugsmessungen an Formkörpern, die aus Mischungen der Ausführungsbeispiele 1 und 2 hergestellt wurden.

| Zusammensetzung / Angaben zu Bestandteilen | Verzugsmessung an Bauteilen: $\Delta(h_{mitte}-h_{links}) + \Delta(h_{mitte}-h_{rechts})$ in [mm] |
|---|---|
| PA 2201 <br> + 0,09 Gew.% Spezialschwarz 4 | 0,17 |
| PA 2201 <br> + 0,09 Gew.% Printex XE-2B | 0,53 |
| PA 2201 <br> + 0,09 Gew.% Monarch® 570 | 0,56 |

Die Auswertung der Verzugstests zeigte einen deutlich geringeren Bauverzug für Gasruß als bei den anderen getesteten Rußtypen. Dies bestätigt die Annahme, dass die Kristallisationstemperatur bei Industrieruß mit dem Verzug korreliert, d.h. je kleiner die Kristallisationstemperatur, desto geringer der Verzug.

**Ausführungsbeispiel 4**

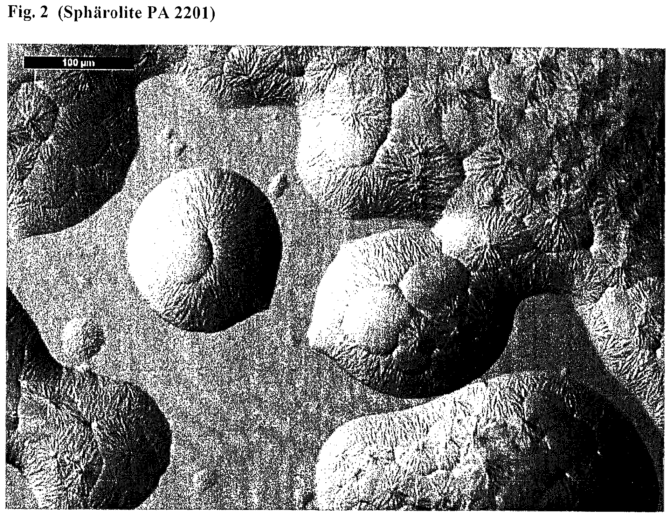

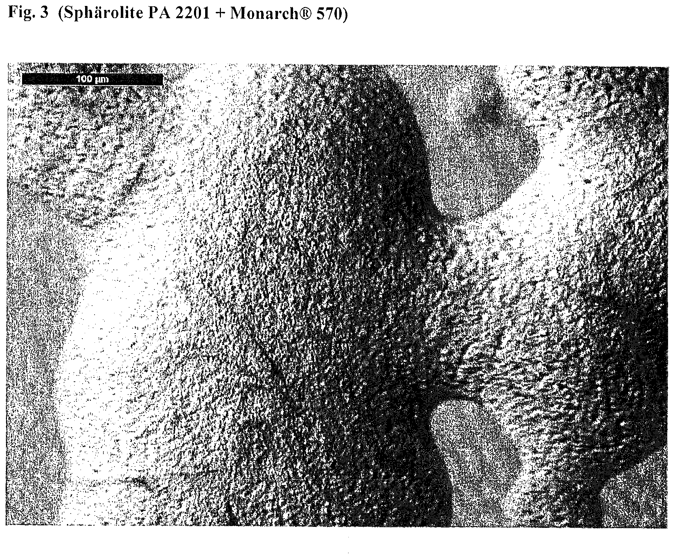

In diesem Beispiel wurden lichtmikroskopische Aufnahmen von abgekühlter Schmelze von PA 12 (hier PA 2201) gemacht. Diese Aufnahmen sind in den Figuren 2 und 3 dargestellt. Fig. 2 zeigt eine abgekühlte Schmelze von PA 12 mit großen Sphäroliten. Fig. 3 zeigt eine abgekühlte Schmelze einer Mischung von PA 12 und Industrieruß am Beispiel Monarch® 570. Dieser Rußtyp fungiert als Keimbildner und führt bei der Kristallisation zu vielen kleinen Sphäroliten. Nicht dargestellt ist eine abgekühlte Schmelze einer Mischung von PA 12 und Gasruß am Beispiel Spezialschwarz 4. Dieser Rußtyp fungiert nicht als Keimbildner und verändert bei der Kristallisation die Sphärolitgröße nicht wesentlich.

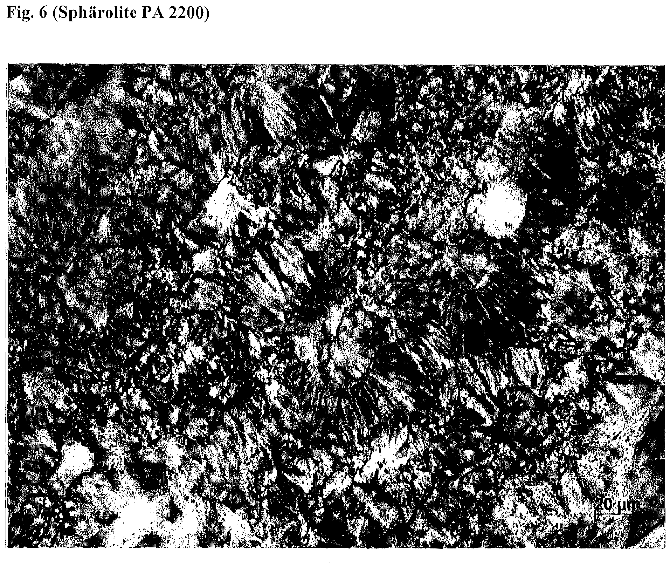

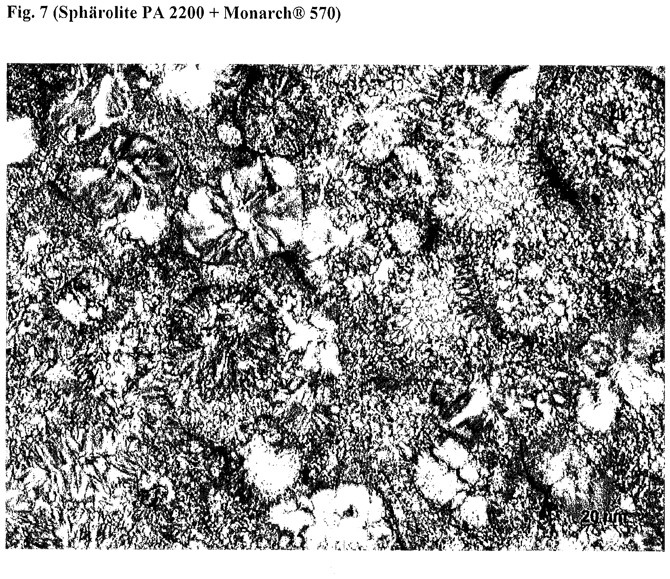

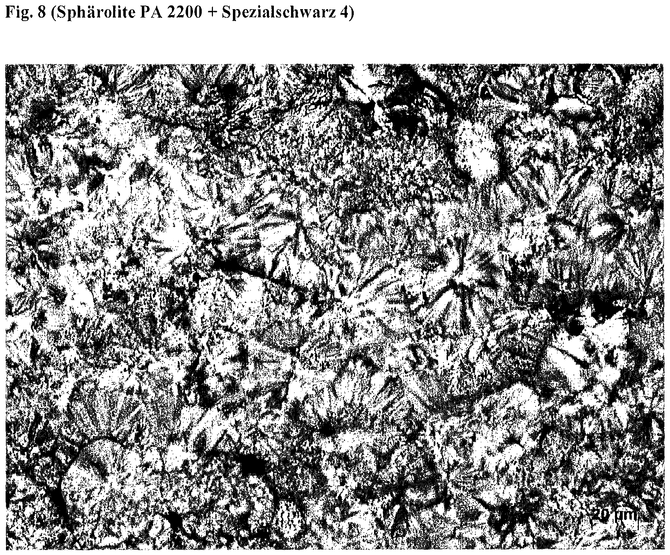

Weitere Ergebnisse derartiger Versuche sind in den Fig. 6 bis 8 gezeigt.

**Ausführungsbeispiel 5**

In diesem Beispiel wurden Mischungen aus Polymerpartikeln und verschiedenen Rußtypen hergestellt. Die Polymerpartikelwaren identisch zu denen im Ausführungsbeispiel 4 verwendeten Partikeln. Die Rußtypen unterschieden sich durch das Herstellungsverfahren und deshalb in ihrer Korngrößenverteilung (KGV). Als weiterer Vergleich wurde eine Mischung untersucht, die keinen Rußtyp enthielt.

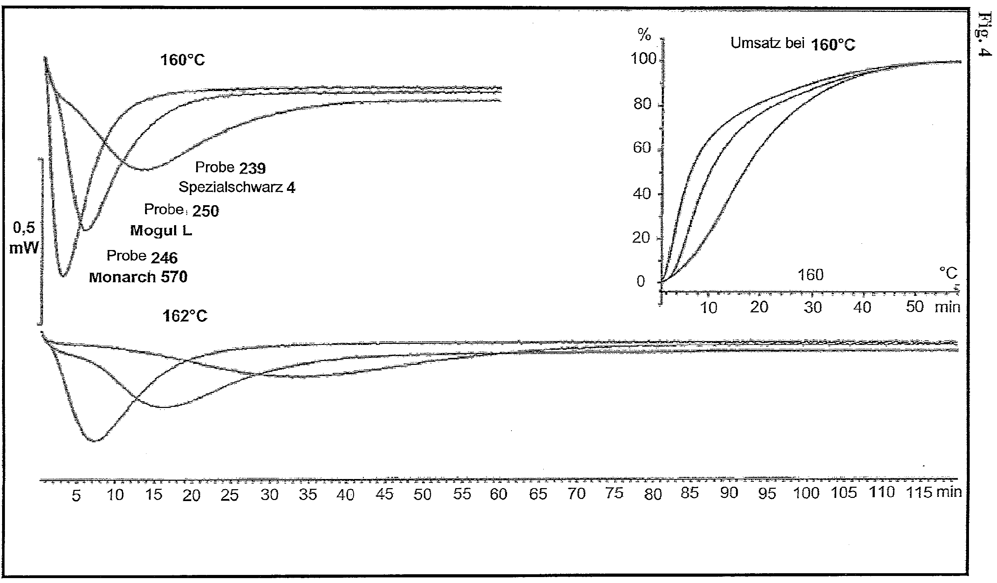

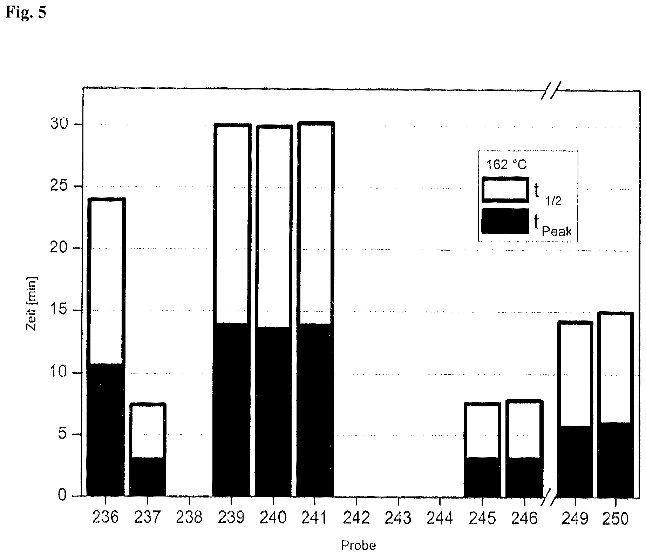

DSC Iso-Kurven und Umsätze der Mischungen wurden aufgenommen und beispielhaft in Fig. 4 gezeigt. Daraus wurde $t_{peak}$ [min] und $t_{1/2}$ [min] und $\alpha$ [%] Umsatz bestimmt. $T_{peak}$ bezeichnet die Zeit der höchsten Kristallisationsgeschwindigkeit. $t_{1/2}$ bezeichnet die Zeit bis die Hälfte der Gesamtkristallisation geschafft ist. Diese Werte sind in der nachfolgenden Tabelle 4 sowie Fig. 5 aufgeführt. Über die DSC-Iso-Kurven und den daraus ermittelten Umsatzkurven der Kristallisation wird die unterschiedliche Kristallisationskinetik von Gasruß (hier: Spezialschwarz 4) sichtbar.

Tab. 4:

| Sample | Zusammensetzung / Angaben zu Bestandteilen | T [°C] | $T_{peak}$ | $t_{1/2}$ | T [°C] | $t_{peak}$ [min] | $t_{1/2}$ |
|---|---|---|---|---|---|---|---|
| 236 | PA 2200 | 160 | 10,6 | 13,4 | 162 | 27,5 | 31,7 |
| 237 | PA 2200+ 0,09 Gew.% Monarch® 570 | | 3,0 | 4,4 | | 8,3 | 11,2 |
| 238 | PA 2200+ 0,09 Gew.% Spezialschwarz 4 | | - | - | | 30,0 | 33,1 |
| 239 | PA 2200+ 0,09 Gew.% Spezialschwarz 4 | | 13,9 | 16,2 | | 32,8 | 36,9 |
| 240 | PA 2200+ 0,09 Gew.% Spezialschwarz 4 | | 13,6 | 16,3 | | 39,3 | 39,9 |
| 241 | PA 2200 + 0,09 Gew.% Spezialschwarz 4 | | 13,9 | 16,3 | | 39,2 | 41,4 |
| 242 | PA 2202 black | | - | - | | 14,4 | 18,2 |
| 243 | PA 2200 + 0,09 Gew.% Monarch® 570 | | - | - | | 7,3 | 10,2 |
| 244 | PA 2200 + 0,09 Gew.% Monarch® 570 | | - | - | | 7,5 | 10,0 |
| 245 | PA 2200+ 0,09 Gew.% Monarch® 570 | | 3,1 | 4,4 | | 7,5 | 11,0 |
| 246 | PA 2200+ 0,09 Gew.% Monarch® 570 | | 3,1 | 4,7 | | 7,1 | 9,9 |
| 249 | PA 2200 + 0,09 Gew.% Mogul L | | 5,7 | 8,5 | | 14,6 | 17,8 |
| 250 | PA 2200 + 0,09 Gew.% Mogul L | | 6,0 | 9,0 | | 16,3 | 20,1 |

**Patentansprüche**

1. Kunststoffpulver zur Verwendung als Aufbaumaterial zum additiven Herstellen eines dreidimensionalen Objekts durch selektives Verfestigen des Aufbaumaterials an den dem Querschnitt des dreidimensionalen Objekts in der jeweiligen Schicht entsprechenden Stellen insbesondere durch Einwirkung einer Strahlung,

   wobei das Kunststoffpulver eine Mischung aus polymerbasierten Partikeln und Partikeln eines partikulären Additivs aufweist und

   wobei das partikuläre Additiv ein partikuläres Kohlenstoffmaterial ist, **dadurch gekennzeichnet, dass** das partikuläres Kohlenstoffmaterial so ausgewählt ist, dass der Kristallisationspunkt der Mischung aus den polymerbasierten Partikeln und dem partikulären Additiv im Vergleich zu dem Kristallisationspunkt einer Mischung aus den polymerbasierten Partikeln ohne dem partikulären Additiv um nicht mehr als 2,5°C erhöht ist, wobei der jeweilige Kristallisationspunkt $T_{K\,Onset}$ entspricht, welcher mittels DSC nach der Norm ISO11357 ermittelt wird.

2. Kunststoffpulver nach Anspruch 1,
   wobei das partikuläre Additiv Ruß und/oder Graphit und insbesondere Gasruß umfasst.

3. Kunststoffpulver nach einem der vorangehenden Ansprüche,
   wobei das partikuläre Additiv einen mittleren Primärteilchendurchmesser im nm-Bereich von 1 nm bis 999 nm aufweist, vorzugsweise einen mittleren Primärteilchendurchmesser von höchstens 500 nm, weiter bevorzugt höchstens 250 nm, weiter bevorzugt höchstens 100 nm aufweist.

4. Kunststoffpulver nach einem der vorangehenden Ansprüche,
   wobei das partikuläre Additiv einen Gasruß umfasst, welcher einen mittleren Primärteilchendurchmesser im Bereich von 15 - 70 nm, bevorzugt mindestens 26 nm und/oder höchstens 58 nm aufweist.

5. Kunststoffpulver nach einem der vorangehenden Ansprüche,
   wobei das partikuläre Additiv einen partikulären NIR-Absorber umfasst, wobei der partikuläre NIR-Absorber vorzugsweise eine Absorption bei mindestens einer der Wellenlängen (980±10) nm und/oder (940±10) nm und/oder (810±10) nm und/oder (640±10) nm aufweist.

6. Kunststoffpulver nach einem der vorangehenden Ansprüche,
   welche in Form einer, vorzugsweise homogenen, Trockenmischung der Polymerpartikel mit dem partikulären Additiv vorliegt.

7. Kunststoffpulver nach einem der vorangehenden Ansprüche,
   wobei der Gewichtsanteil des partikulären Additivs am Gesamtgewicht von Polymerpartikeln und partikulärem Additiv 0,01 % bis 5 %, bevorzugt mindestens 0,02 % und/oder höchstens 2 %, weiter bevorzugt höchstens 1 %, noch weiter bevorzugt höchstens 0,45 % beträgt.

8. Kunststoffpulver nach einem der vorangehenden Ansprüche,
   wobei die polymerbasierten Partikel als Polymermaterial zumindest ein Polymer umfassen, das ausgewählt ist aus zumindest einem Polyaryletherketon (PAEK), Polyarylethersulfon (PAES), Polyamid, Polyester, Polyether, Polylactid, Polyolefin, Polystyrol, Polyphenylensulfid, Polyvinylidenfluoride, Polyphenylenoxid, Polyimid, Polyetherimid, Polycarbonat, bevorzugt aus Polyamid, weiter bevorzugt aus Polyamid 12, Polyamid 11 und/oder Polyamid 1012 und/oder zumindest einem Copolymer, das mindestens eines der vorangehenden Polymere bzw. deren Monomereinheiten einschließt, und/oder zumindest einem Polymerblend, das zumindest eines der genannten Polymere oder Copolymere umfasst.

9. Herstellung eines Kunststoffpulvers nach einem der vorhergehenden Ansprüche, das insbesondere zur Verwendung in einem Verfahren zur additiven Herstellung eines dreidimensionalen Objekts durch selektives Verfestigen eines pulverförmigen Aufbaumaterials an den dem Querschnitt des dreidimensionalen Objekts in der jeweiligen Schicht entsprechenden Stellen, insbesondere durch Einwirkung von Strahlung geeignet ist,
   wobei die Herstellung zumindest die folgenden Schritte umfasst:

   (i) Bereitstellen der polymerbasierten Partikel,
   (ii) Bereitstellen der Partikel des partikulären Additivs, und
   (iii) Trockenes Vermischen zumindest der polymerbasierten Partikel und der Partikel des partikulären Additivs.

10. Dreidimensionales Objekt, welches durch selektives Verfestigen eines pulverförmigen Aufbaumaterials auf Basis von polymerbasierten Partikeln und partikulärem Additiv an den dem Querschnitt des dreidimensionalen Objekts in der jeweiligen Schicht entsprechenden Stellen, insbesondere durch Einwirkung von Strahlung, hergestellt wurde, wobei das partikuläre Additiv ein partikuläres Kohlenstoffmaterial ist und das dreidimensionale Objekt zumindest eines, insbesondere beide der nachfolgenden Merkmale aufweist:

    (a) mikroskopisch beobachtbare kristalline Bereiche in Form von Sphärolithen mit einer Sphärolithgröße von mindestens 20 $\mu$m,
    (b) einen Verzug $\Delta(h_{mitte}-h_{links}) + \Delta(h_{mitte}-h_{rechts})$ von höchstens 0,50 mm.

11. Dreidimensionales Objekt nach Anspruch 10, mit einem Verzug $\Delta(h_{mitte}-h_{links}) + \Delta(h_{mitte}-h_{rechts})$ von $\leq$ 0,25 mm, bevorzugt von $\leq$ 0,20 mm.

12. Dreidimensionales Objekt nach Anspruch 10 oder 11, wobei als Aufbaumaterial ein Kunststoffpulver nach einem der vorhergehenden Ansprüche 1 bis 9 verwendet wurde.

13. System zur Herstellung von Formkörpern durch selektives Verfestigen eines pulverförmigen Aufbaumaterials an den dem Querschnitt des Formkörpers in der jeweiligen Schicht entsprechenden Stellen durch Einwirkung einer Strahlung, wobei das System mindestens eine Strahlungsquelle, eine Prozesskammer, die als offener Behälter mit einer Behälterwandung ausgeführt ist, einen in der Prozesskammer befindlichen Träger, wobei Prozesskammer und Träger gegeneinander in vertikaler Richtung beweglich sind, einen Vorratsbehälter und einen in horizontaler Richtung bewegbaren Beschichter aufweist, wobei der Vorratsbehälter zumindest teilweise mit einem Kunststoffpulver nach einem der Ansprüche 1 bis 9 als Aufbaumaterial gefüllt ist.

14. System nach Anspruch 13, wobei die Strahlungsquelle dazu ausgebildet ist, eine elektromagnetische Strahlung spezifisch in einer im NIR gelegenen Wellenlänge oder Wellenlängenbereich zu emittieren, vorzugsweise umfasst die Strahlungsquelle mindestens einen Laser, vorzugsweise mindestens eine Laserdiode.

15. System nach Anspruch 13 oder 14, wobei die Strahlungsquelle elektromagnetische Strahlung im Bereich von 500 nm bis 1500 nm, insbesondere bei mindestens einer der Wellenlängen (980$\pm$10) nm und/oder (940$\pm$10) nm und/oder (810$\pm$10) nm und/oder (640$\pm$10) nm emittiert.

**Claims**

1. Plastic powder for use as a building material for additively manufacturing a three-dimensional object by selectively solidifying, in particular by exposure to irradiation, the building material at the positions corresponding to the cross-section of the three-dimensional object in the respective layer,

    wherein the plastic powder comprises a mixture of polymer-based particles and particles of a particulate additive, and
    wherein the particulate additive comprises a particulate carbon material which is selected such that the crystallisation point of the mixture of the polymer-based particles and the particulate carbon material is not increased more than 2.5°C, compared to the crystallisation point of a mixture of the polymer-based particles without the particulate carbon material, wherein the respective crystallization point corresponds to $T_{K\,Onset}$, which is determined by DSC.

2. Plastic powder according to claim 1, wherein the particulate additive comprises a carbon black or graphite, in particular gas black.

3. Plastic powder according to any one of the preceding claims, wherein the particulate additive has an average primary particle diameter in the nm range of 1 to 999 nm, preferably has an average primary particle diameter of at most 500 nm, more preferably at most 250 nm, more preferably at most 100 nm.

4. Plastic powder according to any one of the preceding claims, wherein the particulate additive comprises a gas black which has an average primary particle diameter in the range of 15-70 nm, preferably at least 26 nm and/or at most 58 nm.

5. Plastic powder according to any one of the preceding claims, wherein the particulate additive comprises a particulate NIR absorber, wherein the particulate NIR absorber preferably has an absorption at at least one of the wavelengths $(980\pm10)$ nm and/or $(940\pm10)$ nm and/or $(810\pm10)$ nm and/or $(640\pm10)$ nm.

6. Plastic powder according to any one of the preceding claims, which is in the form of a, preferably homogeneous, dry mixture of the polymer particles with the particulate additive.

7. Plastic powder according to any one of the preceding claims, wherein the weight percentage of the particulate additive to the total weight of polymer particles and particulate additive is from 0.01% to 5%, preferably at least 0.02% and/or at most 2%, more preferably at most 1%, still more preferably at most 0.45%.

8. Plastic powder according to any one of the preceding claims, wherein the polymer-based particles comprise as polymer material at least one polymer selected from at least one polyaryletherketone (PAEK), polyarylethersulfone (PAES), polyamide, polyester, polyether, polylactide, polyolefin, polystyrene, polyphenylene sulfide, polyvinylidene fluoride, polyphenylene oxide, polyimide, polyetherimide, polycarbonate, preferably of polyamide, further preferably of polyamide 12, polyamide 11 and/or polyamide 1012 and/or at least one copolymer which includes at least one of the preceding polymers or their monomer units and/or at least one polymer blend comprising at least one of the mentioned polymers or copolymers.

9. Preparation of a plastic powder according to any one of the preceding claims, which, in particular, is suitable for use in a method for the additive maufacturing of a three-dimensional object by selective solidification of a pulverulent building material at the positions corresponding to the cross-section of the three-dimensional object in the respective layer, in particular by exposure to radiation, wherein the preparation comprises at least the following steps:

   (i) providing the polymer-based particles,
   (ii) providing the particles of particulate additive, and
   (iii) dry mixing at least the polymer-based particles and the particles of particulate additive.

10. Three-dimensional object which has been manufactured by selective solidification of a pulverulent building material based on polymer-based particles and a particulate additive at the positions corresponding to the cross-section of the three-dimensional object in the respective layer, in particular by exposure to radiation, wherein the particulate additive is a particulate carbon material and the three-dimensional object has at least one, in particular both, of the following features:

   (a) microscopically observable crystalline regions in the form of spherulites with a spherulite size of at least 20 $\mu$m,
   (b) a distortion $\Delta(h_{centre} - h_{left}) + \Delta(h_{centre} - h_{right})$ of at most 0.50 mm.

11. Three-dimensional object according to claim 10, having a distortion $\Delta(h_{centre} - h_{left}) + \Delta(h_{centre} - h_{right})$ of $\leq 0.25$ mm, preferably of $\leq 0.20$ mm.

12. Three-dimensional object according to claim 10 or 11, wherein as building material a plastic powder according to any one of the preceding claims 1 to 9 has been used.

13. System for manufacturing three-dimensional objects by selectively solidifying a pulverulent building material at the positions corresponding to the cross-section of the three-dimensional object in the respective layer by exposure to a radiation, wherein the system comprises at least one radiation source, a process chamber which is formed as an open container with a container wall, a support arranged in the process chamber, wherein the process chamber and the support are movable relative to one another in a vertical direction, a storage container, and a recoater which is movable in a horizontal direction, wherein the storage container is at least partially filled with a plastic powder according to one of claims 1 to 9 as a building material.

14. System according to claim 13,
wherein the radiation source is adapted to emit electromagnetic radiation specifically in a wavelength or wavelength range located in the NIR, preferably the radiation source comprises at least one laser, preferably at least one laser diode.

15. System according to claim 13 or 14,
wherein the radiation source emits electromagnetic radiation in the range from 500 nm to 1500 nm, in particular at at least one of the wavelengths $(980\pm10)$ nm and/or $(940\pm10)$ nm and/or $(810\pm10)$ nm and/or $(640\pm10)$ nm.

**Revendications**

1. Poudre plastique utilisée comme matériau de construction pour la fabrication additive d'un objet tridimensionnel par solidification sélective, en particulier par exposition au rayonnement, du matériau de construction aux positions correspondant à la section transversale de l'objet tridimensionnel dans la couche respective,

   dans laquelle la poudre plastique comprend un mélange de particules à base de polymère et de particules d'un additif particulaire, et
   dans laquelle l'additif particulaire comprend un matériau de carbone particulaire sélectionné de telle sorte que le point de cristallisation du mélange de particules à base de polymère et du matériau de carbone particulaire n'augmente pas de plus de 2,5°C par rapport au point de cristallisation d'un mélange de particules à base de polymère sans le matériau de carbone particulaire, le point de cristallisation respectif correspondant à $TK_{Onset}$, qui est déterminé par DSC.

2. Poudre plastique selon la revendication 1, dans laquelle l'additif particulaire comprend un suie ou un graphite, en particulier un suie de gaz.

3. Poudre plastique selon l'une des revendications précédentes,
   dans laquelle l'additif particulaire a un diamètre moyen de particule primaire compris entre 1 et 999 nm, de préférence un diamètre moyen de particule primaire d'au plus 500 nm, de préférence d'au plus 250 nm, de préférence encore d'au plus 100 nm.

4. Poudre plastique selon l'une des revendications précédentes,
   dans laquelle l'additif particulaire comprend un noir de gaz dont le diamètre moyen des particules primaires est compris entre 15 et 70 nm, de préférence au moins 26 nm et/ou au plus 58 nm.

5. Poudre plastique selon l'une quelconque des revendications précédentes,
   dans laquelle l'additif particulaire comprend un absorbeur NIR particulaire, l'absorbeur NIR particulaire ayant de préférence une absorption à au moins une des longueurs d'onde $(980\pm10)$ nm et/ou $(940\pm10)$ nm et/ou $(810\pm10)$ nm et/ou $(640\pm10)$ nm.

6. Poudre plastique selon l'une quelconque des revendications précédentes, qui se présente sous la forme d'un mélange sec, de préférence homogène, des particules de polymère avec l'additif particulaire.

7. Poudre plastique selon l'une quelconque des revendications précédentes,
   dans laquelle le pourcentage en poids de l'additif particulaire par rapport au poids total des particules de polymère et de l'additif particulaire est compris entre 0,01 % et 5 %, de préférence au moins 0,02 % et/ou au plus 2 %, de préférence au plus 1 %, de préférence encore au plus 0,45 %.

8. Poudre plastique selon l'une quelconque des revendications précédentes,
   dans laquelle les particules à base de polymère comprennent comme matériau polymère au moins un polymère choisi parmi au moins un polyaryléthercétone (PAEK), polyaryléthersulfone (PAES), polyamide, polyester, polyéther, polylactide, polyoléfine, polystyrène, sulfure de polyphénylène, fluorure de polyvinylidène, oxyde de polyphénylène, polyimide, polyétherimide, polycarbonate, de préférence en polyamide, de préférence encore en polyamide 12, polyamide 11 et/ou polyamide 1012 et/ou au moins un copolymère comprenant au moins un des polymères précédents ou leurs unités monomères et/ou au moins un mélange de polymères comprenant au moins un des polymères ou copolymères mentionnés.

9. Préparation d'une poudre plastique selon l'une quelconque des revendications précédentes, qui est susceptibe notamment à une utilisation dans une méthode de fabrication additive d'un objet tridimensionnel par solidification sélective d'un matériau de construction pulvérulent aux endroits correspondant à la section transversale de l'objet tridimensionnel dans la couche respective, en particulier par exposition au rayonnement, dans laquelle la préparation comprend au moins les étapes suivantes :

    (i) fournir les particules à base de polymère,
    (ii) fournir les particules d'additif particulaire, et
    (iii) mélange à sec au moins des particules à base de polymère et des particules d'additif particulaire.

10. Objet tridimensionnel fabriqué par solidification sélective d'un matériau de construction pulvérulent à base de particules à base de polymère et d'un additif particulaire aux positions correspondant à la section transversale de l'objet tridimensionnel dans la couche respective, en particulier par exposition au rayonnement, dans lequel l'additif particulaire est un matériau de carbone particulaire et l'objet tridimensionnel présente au moins l'une des caractéristiques suivantes, en particulier les deux :

    (a) des régions cristallines observables au microscope sous forme de sphérulites d'une taille d'au moins 20 $\mu$m,
    (b) une distorsion $\Delta(h_{centre} - h_{à\ gauche}) + \Delta(h_{centre} - h_{à\ droite})$ d'au plus 0,50 mm.

11. Objet tridimensionnel selon la revendication 10, présentant une distorsion $\Delta(h_{centre} - h_{à\ gauche}) + \Delta(h_{centre} - h_{à\ droite})$ de $\leq 0{,}25$ mm, de préférence de $\leq 0{,}20$ mm.

12. Objet tridimensionnel selon la revendication 10 ou 11, dans lequel on a utilisé comme matériau de construction une poudre plastique selon l'une quelconque des revendications précédentes 1 à 9.

13. Système de fabrication d'objets tridimensionnels par solidification sélective d'un matériau de construction pulvérulent aux endroits correspondant à la section transversale de l'objet tridimensionnel dans la couche respective par exposition au rayonnement, dans lequel le système comprend au moins une source de rayonnement, une chambre de traitement qui est formée comme un conteneur ouvert avec une paroi de conteneur, un support disposé dans la chambre de traitement, dans lequel la chambre de traitement et le support sont mobiles l'un par rapport à l'autre dans une direction verticale, un conteneur de stockage, et un recycleur qui est mobile dans une direction horizontale, dans lequel le conteneur de stockage est au moins partiellement rempli d'une poudre plastique selon l'une des revendications 1 à 9 en tant que matériau de construction.

14. Système selon la revendication 13, dans lequel la source de rayonnement est adaptée pour émettre un rayonnement électromagnétique spécifiquement dans une longueur d'onde ou une gamme de longueurs d'onde située dans le proche infrarouge, de préférence la source de rayonnement comprend au moins un laser, de préférence au moins une diode laser.

15. Système selon la revendication 13 ou 14, dans lequel la source de rayonnement émet un rayonnement électromagnétique dans la gamme de 500 nm à 1500 nm, en particulier à au moins une des longueurs d'onde $(980 \pm 10)$ nm et/ou $(940 \pm 10)$ nm et/ou $(810 \pm 10)$ nm et/ou $(640 \pm 10)$ nm.

Fig. 1

Fig. 2 (Sphärolite PA 2201)

Fig. 3 (Sphärolite PA 2201 + Monarch® 570)

Fig. 4

EP 3 853 025 B1

Fig. 5

Fig. 6 (Sphärolite PA 2200)

Fig. 7 (Sphärolite PA 2200 + Monarch® 570)

Fig. 8 (Sphärolite PA 2200 + Spezialschwarz 4)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4410046
- WO 2005085326 A1
- DE 102008024281 A1
- DE 102008024288 A1
- DE 102004012683 A1
- EP 14824420
- EP 3079912 A

**In der Beschreibung aufgeführte Nicht-Patentliteratur**

- **GÄCHTER/MÜLLER**. Kunststoff-Additive, 893